Europäisches Patentamt

European Patent Office

Office européen des brevets

(19)

(11) Publication number: **0 034 477**

**B1**

(12) **EUROPEAN PATENT SPECIFICATION**

(45) Date of publication of patent specification: **18.04.84**

(51) Int. Cl.³: **B 23 P 1/08**

(21) Application number: **81300591.5**

(22) Date of filing: **13.02.81**

(54) A power source circuit for an electric discharge machine.

(30) Priority: **16.02.80 JP 18049/80**

(43) Date of publication of application:
**26.08.81 Bulletin 81/34**

(45) Publication of the grant of the patent:
**18.04.84 Bulletin 84/16**

(84) Designated Contracting States:
**CH DE FR GB LI**

(56) References cited:
**GB - A - 2 050 651**
**US - A - 3 259 795**
**US - A - 3 597 570**
**US - A - 3 812 317**
**US - A - 3 875 362**
**US - A - 4 009 361**

**Patents Abstracts of Japan Vol. 4, No. 147, 16 October 1980 page 153M36**

(73) Proprietor: **FANUC LTD**
**5-1, Asahigaoka 3-chome Hino-shi**
**Tokyo 191 (JP)**

(72) Inventor: **Izumiya, Syunzo**
**No. 1097, Date-machi Hachioji-shi**
**Tokyo Dategaoka-Danchi 4-7-302, 193 (JP)**

(74) Representative: **Billington, Lawrence Emlyn et al,**
**HASELTINE LAKE & CO Hazlitt House 28**
**Southampton Buildings Chancery Lane**
**London WC2A 1AT (GB)**

A power source circuit for an electric discharge machine

The present invention relates to a power source circuit with is suitable for use with an electric discharge machine for cutting a work (sometimes known as a work-piece) by a discharge produced between an electrode and the work.

In the case of the electric discharge machining of a work through utilization of a discharge energy of a capacitor which is charged by a power source via a transistor or like switching element, when an arc forms between the electrode and the work the working efficiency drops and the worked surface is apt to be roughened. Such an arc, though not leading to a steady arc for a long time, often occurs momentarily under ordinary working conditions, markedly impairing the working efficiency. To avoid this, it is desired to eliminate an arc immediately when it develops, but prior art power sources for electric discharge machining are not provided with proper means therefor and hence they have the defect of poor working efficiency.

U.S. Patent No. 3,259,795 discloses a machine for spark erosion of a workpiece, in which machine there is provided a power source circuit comprising a capacitor to be charged by a power supply via a switching element, and the charged voltage of the capacitor is to be applied across a working gap between an electrode and a workpiece when the circuit is in operation. It is acknowledged in this U.S. Patent that the working gap may become contaminated, or may become equal to zero in the event of short-circuit occurring between the electrode and the workpiece. In these circumstances current can flow across the working gap without having any erosive effect, although causing an undesirable and harmful degree of heating. U.S. Patent 3,259,795 seeks to overcome this problem by applying a small reference potential across the working gap, and by charging the capacitor only when the reference potential is at a certain value indicating that the working gap is clear.

According to the present invention there is provided a power source circuit for an electric discharge machine, in which circuit a capacitor is to be charged by a power supply via a switching element, and the charged voltage of the capacitor is to be applied across a working gap between an electrode and a workpiece when the circuit is in operation, characterised in that the power source circuit comprises:

a first oscillator for producing a pulsed signal having predetermined ON and OFF periods;

a second oscillator which is arranged such that every time the working gap voltage drops below a predetermined voltage when the power source circuit is in use, the second oscillator is started to produce first an ON pulse of a longer duration than that of the pulsed signal of the first oscillator and next an OFF pulse of a longer duration than the OFF period of the pulsed signal of the first oscillator, and thereafter repeats alternate generation; and

logic circuitry arranged such that the logic product of output signals from the first and second oscillators is used in a drive signal for the switching element when the circuit in in use, and the predetermined voltage being such a value that the working gap voltage will stay below this value in the event of an arc being caused in the working gap when the circuit is in use.

Preferably, when an arc forms in the working gap, the second oscillator is started, so that a current flowing to the working gap is cut-off by the OFF pulse of the long period for a relatively long time, thereby quickening the restoration of the working gap from insulation loss caused by the arcing.

Preferred embodiments of the invention provide a power source circuit which is suitable for use with a wire-cut electric discharge machine or the like, which is capable of quickly eliminating an arc, and which enables enhancement of electric discharge machining efficiency.

For a better understanding of the invention and to show how it may be put into effect reference will now be made, by way of example, to the accompanying drawing in which:

Fig. 1 is a block diagram illustrating the principal part of an embodiment of a power source circuit according to the present invention; and

Fig. 2 is a waveform diagram showing examples of a working gap voltage $V_G$, a base signal b of a transistor Q and output pulses of a second oscillator OSC2 during the operation of the power source circuit shown in Fig. 1.

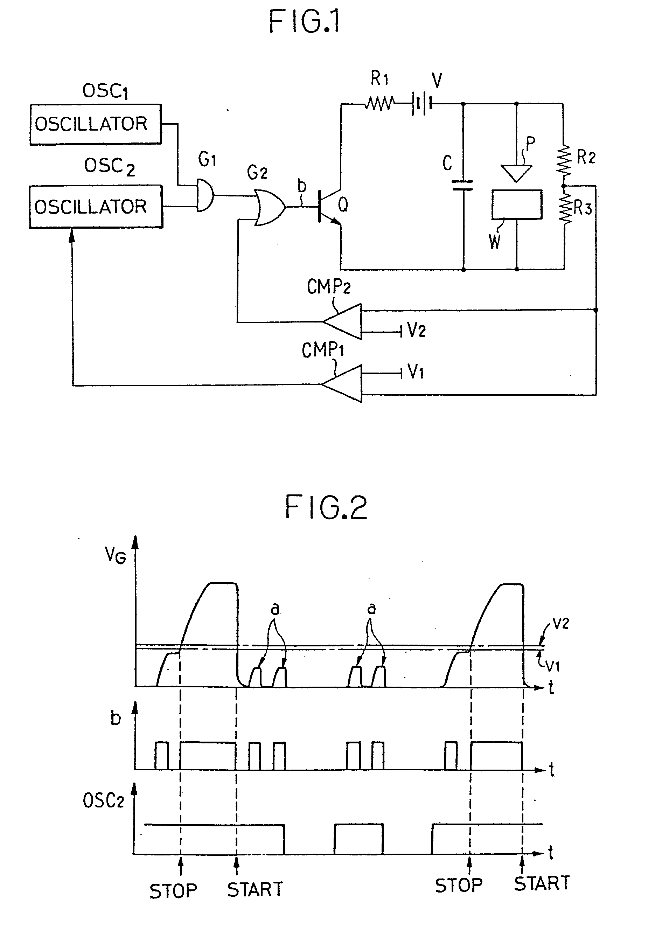

In Fig. 1, reference character P indicates an electrode; W designates a work; C identifies a capacitor; V denotes a DC high-tension power supply; Q represents a switching element, for example a transistor; R1 to R3 show resistors; CMP1 and CMP2 refer to first and second comparators; OSC1 and OSC2 indicate first and second oscillators, G1 designates an AND circuit; and G2 identifies an OR circuit.

The capacitor C is charged by the DC high-tension power supply V via the resistor R1 and the transistor Q, and the charged voltage is applied across the electrode P and the work W to produce a discharge in the working gap defined therebetween. A working gap voltage $V_G$ during working is detected by the resistors R2 and R3 and provided to one input of each of the first and second comparators CMP1 and CMP2. The first comparator CMP1 compares the working gap voltage $V_G$ and a reference voltage $V_1$ and when the working gap voltage

$V_G$ is reduced by the discharge to be lower than a potential level $v_1$ shown in Fig. 2, the comparator CMP1 starts the second oscillator OSC2 and stops it from oscillation when the working gap voltage $V_G$ is raised by the charging of the capacitor C to be higher than the potential level $v_1$. In contrast thereto, the second comparator CMP2 compares the working gap voltage $V_G$ and another reference voltage $V_2$ and holds the transistor Q in the ON state while the working gap voltage $V_G$ remains above potential level $v_2$ shown in Fig. 2.

The first oscillator OSC1 steadily applies pulse signals of a short pulse duration to the AND circuit G1 and usually the ON and OFF periods of the output from the first oscillator OSC1 can arbitrarily be set by an external setting circuit (not shown). The second oscillator OSC2, when started, generates an ON pulse of a longer duration than that of the pulse signal from the first oscillator OSC1 first and then an OFF pulse of a longer duration than the OFF period of the pulse signal from the first oscillator OSC1; thereafter, the second oscillator repeats alternate generation of such ON and OFF pulses. When stopped, the second oscillator OSC2 stops its oscillation and continues to produce the ON pulse. Next, a description will be given, with reference to Fig. 2, of the operation of the circuit shown in Fig. 1.

In the initial state, the charging voltage of the capacitor C is substantially zero and, accordingly the second oscillator OSC2 is started by the output from the first comparator CMP1 and provides the ON and OFF pulses alternately with each other. Further, the output from the second comparator CMP2 is low-level. In this state, when the output pulse of the first oscillator OSC1 is provided to the base of the transistor Q via the AND circuit G1 and the OR circuit G2, the transistor Q repeats an ON-OFF operation and the capacitor C is charged by the DC high-tension power supply V. At this time, if the electrode P and the work are sufficiently insulated from each other without forming an arc in the working gap therebetween, the charging voltage of the capacitor C, that is, the working gap voltage $V_G$, is able to exceed the aforesaid potential levels $v_1$ and $v_2$.

When the working gap voltage $V_G$ exceeds the potential level $v_1$, the oscillation of the second oscillator OSC2 is stopped by the output from the first comparator CMP1. But since the second oscillator OSC2 continues to yield the ON pulse, the output pulse of the first oscillator OSC1 can be applied to the base of the transistor Q. In addition, since the transistor Q is held in the ON state by the output from the second comparator CMP2 at the moment when the working gap voltage $V_G$ exceeds the potential level $v_2$, the capacitor C is charged up to a value substantially equal to the voltage of the DC high-tension power supply V. And when a discharge is produced across the working gap a little time thereafter, the working gap voltage

$V_G$ rapidly drops below the potential levels $v_1$ and $v_2$, so that the second oscillator OSC2 is restarted by the output from the first comparator CMP1 and the output from the second comparator CMP2 becomes low-level, resulting in the circuit being restored to its initial state.

The above-described operations are carried out under normal working conditions. When an arc is caused in the working gap, an instananeous arc discharge is repeated as indicated by a in Fig. 2 and, as a result of this, the working gap voltage $V_G$ is unable to rise above a certain value. In other words, the working gap voltage $V_G$ does not exceed the potential levels $v_1$ and $v_2$. In the conventional power sources for electric discharge machines, since only the output pulse from the first oscillator OSC1 is supplied directly to the transistor Q, it is difficult to eliminate an arc once it forms. In the present embodiment, however, when an arc is caused, since the second oscillator OSC2 is held in its oscillating state, the current flowing across the working gap is cut off by the OFF pulse of the short duration from the first oscillator OSC1 and the OFF pulse of the long duration from the second oscillator OSC2, thereby facilitating a recovery of insulation of the working gap. Accordingly, since normal charge and discharge are quickly started, the frequency of discharge per unit time can be increased to provide for enhanced efficiency in working.

As will be appreciated from the foregoing description, the potential levels $v_1$ and $v_2$ which are operating levels of the first and second comparators CMP1 and CMP2 are set to be a little higher than the highest voltage of the working gap voltage $V_G$ during arcing. It is also possible to set the potential level $v_1$ to be equal to or higher than the potential level $v_2$ so long as it lies within the abovesaid range and, in this case, the second oscillator OSC2 need not be held to produce the ON pulse when its oscillation is stopped. Also it is possible to employ such an arrangement in which the second comparator CMP2 is omitted and the output from the first comparator CMP1 is provided via a NOT circuit (not shown) to the OR circuit G2.

As has been described in the foregoing, when an arc is caused in the working gap, the OFF period of the transistor inserted in the charging path of the capacitor is increased to cut off the current flowing across the working gap for a relatively long period of time, thereby quickly recovering the insulation properties of the working gap lost during arcing. Accordingly, the frequency of discharging can be increased to improve the working efficiency.

It will be apparent that many modifications and variations may be effected without departing from the scope of the novel concepts of this invention, as defined by the following claims.

**Claims**

1. A power source circuit for an electric discharge machine, in which circuit a capacitor is to be charged by a power supply via a switching element, and the charged voltage of the capacitor is to be applied across a working gap between an electrode and a workpiece when the circuit is in operation, characterised in that the power source circuit comprises:

— a first oscillator for producing a pulsed signal having predetermined ON and OFF periods;
— a second oscillator which is arranged such that every time the working gap voltage drops below a predetermined voltage when the power source circuit is in use, the second oscillator is started to produce first an ON pulse of a longer duration than that of the pulsed signal of the first oscillator and next an OFF pulse of a longer duration than the OFF period of the pulsed signal of the first oscillator, and thereafter repeats alternate generation; and
— logic circuitry arranged such that the logic product of output signals from the first and second oscillators is used in a drive signal for the switching element when the circuit is in use, and the predetermined voltage being such a value that the working gap voltage will stay below this value in the event of an arc being caused in the working gap when the circuit in in use.

2. A power source circuit according to claim 1, wherein the second oscillator is arranged to be started by the output signal from a comparator which compares the working gap voltage with said predetermined voltage.

3. A power source circuit according to any one of the preceding claims, wherein when the circuit is in use said drive signal comprises a logic function signal of said logic product and an output signal from a further comparator which issues a signal when said working gap voltage is higher than a further predetermined voltage.

4. A power source circuit according to claim 3, wherein said further logic function is an OR function.

5. A power source circuit according to claim 3 or 4, wherein the two predetermined voltages are substantially equal to one another.

6. A power source circuit according to claim 3, 4 or 5, wherein the further predetermined voltage is of such a value that the working gap voltage will stay below the value in the event of an arc being caused in the working gap when the circuit is in use.

**Patentansprüche**

1. Stromversorgungsschaltung für eine mit elektrischer Entladung arbeitende Maschine, in welcher Schaltung ein Kondensator durch eine Stromquelle über ein Schalterelement zu laden ist und die aufgeladene Spannung des Kondensators an einen Bearbeitungsspalt zwischen einer Elektrode und einem Werkstück anzulegen ist, wenn die Schaltung in Tätigkeit ist, gekennzeichnet durch

einen ersten Oszillator ($OSC_1$) zur Erzeugung eines Impulssignals mit vorbestimmten Einschalt- und Ausschalt-Zeitabschnitten,
einen zweiten Oszillator ($OSC_2$), welcher so eingerichtet ist, daß er jedesmal, wenn die Bearbeitungsspaltspannung unter eine vorbestimmte Spannung abfällt, wenn die Stromversorgungsschaltung in Betrieb ist, in Gang gesetzt wird, um zuerst einen EIN-Impuls von längerer Dauer als der Dauer des Impulssignals des ersten Oszillators und dann einen AUS-Impuls von längerer Dauer als dem Ausschalt-Zeitabschnitt des Impulssignals des ersten Oszillators zu erzeugen, und danach die Abwechselnde Erzeugung wiederholt, sowie
einen Logikschaltkreis ($G_1$, $G_2$), der so angeordnet ist, daß das logische Produkt von Ausgangssignalen von dem ersten und dem zweiten Oszillator in einem Antriebssignal für das Schalterelement (Q) verwendet wird, wenn die Schaltung in Betrieb ist, und die vorbestimmte Spannung einen solchen Wert aufweist, daß die Bearbeitungsspaltspannung unter diesem Wert bleibt, falls in Lightbogen in dem Bearbeitungsspalt verursacht wird, wenn die Schaltung in Betrieb ist.

2. Schaltung nach Anspruch 1, dadurch gekennzeichnet, daß der zweite Oszillator ($OSC_2$) so eingerichtet ist, daß er durch das Ausgangssignal von einem Komparator ($CMP_1$) zu starten ist, welcher die Bearbeitungsspaltspannung mit der vorbestimmten Spannung vergleicht.

3. Schaltung nach Anspruch 1 oder 2, dadurch gekennzeichnet, daß, wenn die Schaltung in Betrieb ist, das Antriebssignal ein Logikfunktionssignal des logischen Produkts und ein Ausgangssignal von einem weiteren Komparator ($CMP_2$) umfaßt, welcher ein Signal abgibt, wenn die Bearbeitungsspaltspannung höher ist als eine weitere vorbestimmte Spannung.

4. Schaltung nach Anspruch 3, dadurch gekennzeichnet, daß die weitere Logikfunction eine ODER-Funktion ist.

5. Schaltung nach Anspruch 3 oder 4, dadurch gekennzeichnet, daß die zwei vorbestimmten Spannungen im wesentlichen einander gleich sind.

6. Schaltung nach Anspruch 3, 4 oder 5, dadurch gekennzeichnet, daß die weitere vorbestimmte Spannung einen solchen Wert besitzt, daß die Bearbeitungsspaltspannung unter dem Wert bleibt, falls ein Lightbogen in dem Bearbeitungsspalt verursacht wird, wenn die Schaltung in betrieb ist.

**Revendications**

1. Un circuit de source d'alimentation pour une machine à décharge électrique, dans lequel un condensateur doit être chargé par une alimentation par l'intermédiaire d'un élément de commutation, et la tension de charge du condensateur doit être appliquée aux bornes d'un intervalle d'usinage, entre une électrode et une pièce à usiner, lorsque le circuit est en fonctionnement, caractérisé en ce que le circuit de source d'alimentation comprend:

— un premier oscillateur destiné à produire un signal sous forme d'impulsions ayant des durées prédéterminées à l'état actif et à l'état inactif;

— un second oscillateur qui est conçu de façon que chaque fois que la tension de l'intervalle d'usinage tombe au-dessous d'une tension prédéterminée lorsque le circuit de source d'alimentation est en cours d'utilisation, le second oscillateur démarre pour produire tout d'abord une impulsion à l'état actif d'une durée supérieure à celle du signal sous forme d'impulsions du premier oscillateur, puis ensuite une impulsion à l'état inactif d'une durée supérieure à la durée à l'état inactif du signal sous forme d'impulsions du premier oscillateur, après quoi le second oscillateur répète la génération alternée; et

— un circuit logique conçu de façon que le produit logique de signaux de sortie des premier et second oscillateurs soit utilisé dans un signal d'attaque pour l'élément de commutation lorsque le circuit est en cours d'utilisation, la tension prédéterminée ayant une valeur telle que la tension de l'intervalle d'usinage demeure inférieure à cette valeur dans le cas où un arc se produit dans l'intervalle d'usinage lorsque le circuit est en cours d'utilisation.

2. Un circuit de source d'alimentation selon la revendication 1, dans lequel le second oscillateur est conçu de façon à démarrer sous l'effet du signal de sortie d'un comparateur qui compare la tension de l'intervalle d'usinage avec la tension prédéterminée.

3. Un circuit de source d'alimentation selon l'une quelconque des revendications précédentes, dans lequel lorsque le circuit est en cours d'utilisation, le signal d'attaque consiste en un signal qui est une fonction logique du product logique et d'un signal de sortie d'un comparateur supplémentaire qui émet un signal lorsque la tension de l'intervalle d'usinage est supérieure à une tension prédéterminée supplémentaire.

4. Un circuit de source dl'alimentation selon la revendication 3, caractérisé en ce que la fonction logique supplémentaire est une fonction OU.

5. Un circuit de source d'alimentation selon la revendication 3 ou 4, dans lequel les deux tensions prédéterminées sont pratiquement mutuellement égales.

6. Un circuit de source d'alimentation selon la revendication 3, 4 ou 5, dans lequel la tension prédéterminée supplémentaire a une valeur telle que la tension de l'intervalle d'usinage demeure inférieure à cette valeur dand le cas où un arc de forme dans l'intervalle d'usinage lorsque le circuit est en cours d'utilisation.

# FIG.1

# FIG.2